## Europäisches Patentamt
## European Patent Office
## Office européen des brevets

(11) Numéro de publication: **0 002 152**
**B1**

(12) **FASCICULE DE BREVET EUROPEEN**

(45) Date de publication du fascicule du brevet: **01.12.82**

(51) Int. Cl.³: **H 01 J 49/26, G 01 T 1/28**

(21) Numéro de dépôt: **78400174.5**

(22) Date de dépôt: **13.11.78**

(54) Spectrographe de masse.

(30) Priorité: **15.11.77 FR 7734271**

(43) Date de publication de la demande:
**30.05.79 Bulletin 79/11**

(45) Mention de la délivrance du brevet:
**01.12.82 Bulletin 82/48**

(84) Etats contractants désignés:
**CH DE GB**

(56) Documents cités:
**FR - A - 1 087 954**
**FR - A - 1 523 030**
**FR - A - 2 446 060**
**US - A - 3 538 328**
**US - A - 3 916 187**
**US - A - 3 946 227**

**ZEITSCHRIFT FUER PHYSIK, vol. 145, 1956,
Berlin, DE, W. SCHUETZE et al. "Eine neue
Methode zur Messung extrem kleiner
Ionenströme im Hochvakuum", pages 44—47
INTERNATIONAL JOURNAL OF MASS
SPECTROMETRY and ion physics, vol. 10,**

(73) Titulaire: **COMMISSARIAT A L'ENERGIE
ATOMIQUE Etablissement de Caractère
Scientifique Technique et Industriel
B.P. 510
F-75752 Paris Cedex 15 (FR)**

(73) Titulaire: **GESELLSCHAFT FÜR STRAHLEN- UND
UMWELTFORSCHUNG M.B.H.
Ingolstädter Landstrasse 1 Post Oberschleissheim
D-8042 Neuherberg (DE)**

(72) Inventeur: **Eloy, Jean-François
Labis de Dessous
F-38330 Saint Ismier (FR)**
Inventeur: **Unsöld, Eberhard
Mohrstrasse 6
D-8000 München 45 (DE)**

(74) Mandataire: **Mongrédien, André et al,
c/o Brevatome 25, rue de Ponthieu
F-75008 Paris (FR)**

(56) Documents cités:
**1972/1973, Amsterdam, NL, G. G. WANLESS
"Field ionisation mass spectrometry using a
scintillation detector", pages 85—105**

Courier Press, Leamington Spa, England.

La présente invention concerne un spectrographe de masse

On sait qu'un spectrographe de masse est un appareil produisant des ions à partir d'une substance à analyser puis, triant ces ions suivant le rapport m/e de leur masse à leur charge. Ce rapport permet de déterminer avec une grande précision, la masse de chacun des ions formés et de compter le nombre d'ions de chaque espèce, ce qui permet de déterminer la composition de la substance.

Un spectrographe de masse comprend généralement une source d'ions, un analyseur ionique et un détecteur. Les sources d'ions sont soit des sources pulsées, soit des sources continues. Les analyseurs peuvent être de différents types; c'est ainsi que l'on distingue les spectrographes à analyseur magnétique dans lesquels l'analyseur joue le rôle de séparateur spatial des espèces ioniques. On distingue également le spectrographe à analyseur électrostatique généralement associé à un analyseur magnétique agissant comme séparateur spatial. Cet analyseur d'ions peut également être constitué par un espace libre, qui n'est soumis à aucun champ et qui joue le rôle de séparateur temporel des ions. Dans ce cas, il est courant de dire que le spectrographe est de type "à séparation en temps de vol".

Dans un analyseur magnétique, les ions issus d'une même fente objet de la source d'ions, et qui sont dotés de la même énergie cinétique, parcourent des trajectoires circulaires dont les rayons de courbure répondent à la formule:

$$R = \frac{m \cdot V}{e \cdot B}$$

Dans cette formule, $m$ désigne la masse d'un ion, V désigne sa vitesse, $e$ sa charge et B l'induction du champ magnétique auquel cet ion est soumis. Il en résulte que les espèces ioniques sont séparées spatialement.

Dans un analyseur en temps de vol, tous les ions ont au départ la même énergie cinétique et ils parcourent la même trajectoire $x$ dans un temps $t$ répondant à la formule:

$$t = \frac{x}{v}$$

où $v$ est la vitesse des ions.
Cette vitesse est exprimée par la formule:

$$v = \sqrt{\frac{2 \cdot E_c}{m}},$$

$E_c$ désigne, dans cette formule, l'énergie cinétique d'un ion considéré.

Dans ce type d'analyseur, les espèces ioniques sont séparées temporellement suivant la formule $t = k\sqrt{m}$, k désignant une constante. Il en résulte qu'un spectrographe de masse à temps de vol ne peut fonctionner qu'avec une source d'ions pulsés. En effet, l'instant $t_0$ de départ des ions doit être défini avec une très grande résolution temporelle.

Les spectrographes de masse peuvent également être classés selon les types de détecteurs utilisés. Le type de détecteur dépend généralement du type d'analyseur. Dans un spectrographe de masse à analyseur magnétique, ou à analyseur électrostatique couplé avec un analyseur magnétique, il est préférable d'utiliser un détecteur à collection panoramique, afin d'augmenter le potentiel analytique du spectrographe. En effet, dans ce cas, il est nécessaire que l'optique ionique présente une surface image plane, formée à partir de tous les points images de chacune des espèces ioniques issues de la même fente objet.

Dans un spectrographe de masse à temps de vol, le point image de la fente objet est unique. Il en résulte que dans ce type de spectrographe, le détecteur utilisé doit présenter une très grande rapidité de réponse en même temps qu'une surface collectrice d'ions, de dimensions restreintes. Parmi les détecteurs panoramiques adaptés aux analyseurs à séparation spatiale, le plus connu est la plaque photographique. Le détecteur photographique collecte simultanément toutes les espèces ioniques et intègre les différents signaux collectés dans le temps. Sa dynamique, qui est le rapport du signal maximum détecté au signal minimum détecté, est de l'ordre de $10^3$ à $10^4$. Sa limite de détection est de $10^6$ ions/mm² et par raie détectable. Son pouvoir de résolution spatial est de l'ordre de quelques micromètres. Ce détecteur, s'il présente une bonne résolution spatiale ainsi qu'une bonne sensibilité, a cependant pour inconvénient de présenter des difficultés de mise en oeuvre et d'utilisation: le développement, l'enregistrement, les courbes de calibrage des plaques photographiques, nécessitent des délais importants de mise en oeuvre.

Il est connu de remplacer la plaque photographique par une pluralité de photomultiplicateurs sensibles chacun à un faisceau d'ions de masse déterminée, et un seul. Ce système est lourd et encombrant, il ne permet pratiquement pas de séparer des masses ioniques voisines.

Il est connu, pour remédier à ces inconvénients de remplacer le détecteur photographique panoramique ou le système à photomultiplicateurs multiples par un convertisseur ion-électron-photon, appliqué à l'analyse par séparation spatiale. Ce convertisseur est conçu de façon à conserver la résolution spatiale du spectre de masse collecté sur la surface focale de l'optique ionique. Il comprend par exemple, une plaquette de microcanaux amplificateurs d'électrons, dans lesquels la conversion ion-électron est réalisée directement lorsqu'un ion vient frapper la paroi interne d'un canal. Cette plaquette comporte plusieurs milliers de petits canaux dont le diamètre est d'environ 12 microns. Ces canaux sont situés les uns contre les autres et débouchent sur un scintillateur constitué par une couche phosphorescente aluminisée, permettant la conversion des électrons débouchant des canaux, en photons. Le transport des photons constituant les informations lumineuses, est réalisé par un certain nombre de guides de lumière ou fibres optiques, qui convergent tous vers une fenêtre de lecture de spectre. Ce spectre doit être lu grâce à une caméra vidicon à balayage. Ce système est très onéreux et très délicat à manipuler. De plus, il nécessite une collection continue du spectre pour permettre la lecture par balayage; il présente une grande sensibilité et conserve une certaine résolution spatiale permettant de séparer les différentes masses à détecter et à mesurer. Il a cependant pour inconvénient de présenter aux faisceaux d'ions incidents, une surface de joints aveugles entre chaque canal de la plaquette. Il en résulte que la surface de conversion est discontinue et qu'il y a une perte en résolution spatiale et en informations analytiques. De plus, il existe pour ce type de plaquettes, une certaine méconnaissance des caractéristiques de conversion ion-électron, pour différentes espèces. l'exactitude des mesures est donc incertaine.

Un autre spectrographe connu utilisant un détecteur panoramique permettant une analyse par séparation spatiale, utilise comme précédemment une conversion ion-électron-photon. La conversion des ions en électrons est réalisée grâce à un réseau de fils ou de rubans électriques tendus, sur lesquels les faisceaux d'ions incidents produisent l'émission d'électrons. Ces électrons viennent ensuite frapper des scintillateurs individuels qui produisent des photons. Ces photons sont canalisés dans des guides de lumière individuels tels que des fibres optiques et aboutissent ensuite à un photomultiplicateur propre à chaque fibre optique. Un spectrographe de ce type présente, comme dans le cas précédent, une surface de conversion discontinue. Il en résulte donc une perte de résolution spatiale dans la détection des ions. Ce spectrographe présente de plus des problèmes dus à la mise en oeuvre d'une pluralité de photomultiplicateurs, notamment des problèmes d'encombrement, de qualité de vide obtenu et de régulation de température de fonctionnement.

Afin d'éliminer cette discontinuité dans la résolution spatiale des détecteurs de spectrographe, il est connu de réaliser une électrode de conversion à structure continue. Cette électrode est généralement portée à un potentiel négatif et les ions viennent la frapper, sans être préalablement accélérés dans un espace défini.

Ce potentiel négatif permet de limiter la capture des ions et de supprimer les phénomènes de rebondissement lors de l'impact de ces ions sur l'électrode de conversion. Les électrons secondaires qui sont émis à la suite des impacts, sont canalisés par un champ électrique perpendiculaire au plan d'incidence des faisceaux d'ions. Ces électrons sont ensuite recueillis sur une plaque photographique, après avoir franchi un diaphragme porté au potentiel de la terre. Un tel spectrographe, bien que présentant une résolution spatiale continue, ne permet pas de supprimer l'utilisation ce la plaque photographique.

Il résulte de ces observations, qu'aucun spectrographe connu et permettant d'effectuer des mesures en temps de vol, ne présente en même temps un détecteur panoramique d'ions à structure continue, associé à une source pulsée d'ions.

La présente invention a pour but de remédier à ces inconvénients et notamment de réaliser un spectrographe permettant des mesures spectrales fondées sur le principe du temps de vol. La présente invention a pour objet un spectrographe de masse comprenant:

— une source d'ions;
— des moyens d'analyse des ions émis par la source;
— un détecteur panoramique d'ions.

Ce spectrographe est caractérisé en ce que les moyens permettant la séparation spatiale magnétique sont associés à des moyens de mesure à temps de vol et en ce que le détecteur panoramique d'ions permet la détection d'impact d'ions issus de tout l'espace créé par les moyens permettant la séparation spatiale magnétique, au moyen d'un seul détecteur photoélectrique et en ce que la source d'ions est une source pulsée.

Selon des caractéristiques avantageuses, ladite source pulsée est une source à laser déclenché; cette source peut également être une source à étincelles.

Dans une forme particulière d'exécution, le détecteur panoramique d'ions comprend:

— un diaphragme d'entrée des ions;
— des moyens situés en regard du diaphragme et permettant une conversion des ions en électrons;
— des moyens situés en regard des moyens de conversion des ions en électrons et permettant une conversion des électrons en photons; le détecteur photoélectrique étant siuté en regard des moyens de conversion des électrons en photons;
— et des moyens de conduction des photons, situés entre les moyens de conversion des électrons en photons et le détecteur photoélectrique.

Selon une caractéristique particulière, ces moyens de conduction des photons ont une structure monobloc. Ils sont constitués par exemple, dans une résine synthétique incolore.

Les caractéristiques et avantages de l'invention ressortiront mieux de la description qui va suivre, donnée à titre purement illustratif, en référence aux figures annexées sur lesquelles:

— la figure 1 représente une vue de dessus en coupe d'un spectrographe conforme à l'invention;
— la figure 2 représente une vue de côté en coupe du spectrographe de la figure 1.

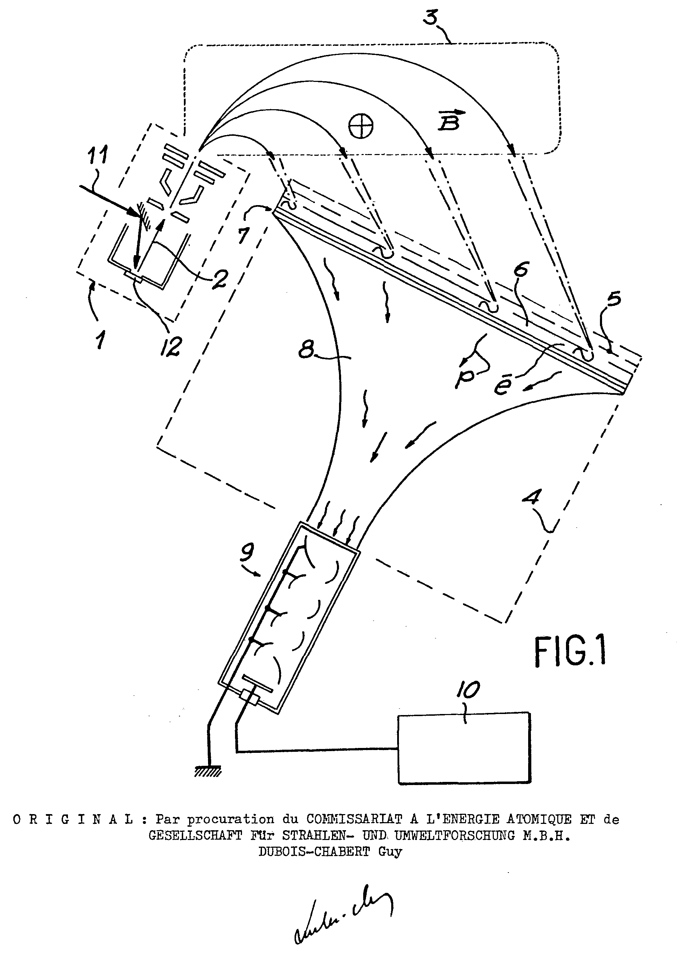

En référence à la figure 1, on a représenté en vue de dessus et en coupe, un spectrographe conforme à l'invention. Ce spectrographe comporte une source 1 d'ions, émettant un faisceau 2, en direction de moyens 3 d'analyse des ions émis par la source. Ces moyens d'analyse comportent principalement des moyens pour produire un champ magnétique dont l'induction a été représentée sur la figure par $\vec{B}$. Ces moyens d'analyse permettant d'assurer une dissociation spatiale des différentes espèces ioniques. Il en résulte que le faisceau d'ions s'infléchit et qu'il est dissocié tel que représenté sur la figure. Les ions ainsi dissociés parviennent à un détecteur panoramique 4 d'ions, qui, associé aux moyens 3 d'analyse, vont permettre la mise en oeuvre du spectrographe selon un mode du fonctionnement dit "à séparation magnétique et à temps de vol".

En effet, à chaque masse ionique correspond dans ce système une longueur de parcours $l$ différente d'autant plus petite que la masse ionique est plus petite, et le temps de parcours est d'autant plus petit que la masse ionique est petite. Ce temps de vol varie comme la masse et non plus comme la racine carrée de la masse comme dans les spectromètres à temps de vol classiques à analyser par espace libre sans champ.

Le détecteur panoramique comprend un diaphragme 5 d'entrée des ions, associé à des moyens 6 qui permettent de convertir les ions en provenance de la source, en électrons e⁻. Un détecteur photonique 7 est situé en regard des moyens de conversion 6 des électrons en photons. Des moyens de conduction 8, des photons délivrés par les moyens de conversion 7 permettent d'appliquer un photomultiplicateur 9, tous les photons correspondant aux ions produits par la source, pendant un temps déterminé et à partir d'un instant donné. Les signaux de sortie du photomultiplicateur sont appliqués à des moyens d'enregistrement en temps synchronisés avec les moyens de pulsation de la source d'ions et de visualisation 10 du spectre des photons, moyens classiques en spectrométrie à temps de vol. Ces moyens peuvent être constitués soit par un appareil à tube cathodique, enregistrant en fonction du temps le signal issu du photomultiplicateur et le visualisant: on obtient directement l'allure du spectre. Ils peuvent comporter un système de découpage en temps des $n$ différents canaux correspondant à chaque masse et d'enregistrement des valeurs de signaux observés dans les différents canaux dans $n$ unités de stockage. Le diaphragme 5, les moyens de conversion 6 des ions en électrons, les moyens de conversion 7 des électrons en photons et les moyens 8 de conduction des photons seront décrits plus loin en détail.

La source 1 d'ions, pulsée, est soit une source à laser déclenchée, soit une source à étincelle. Dans l'exemple de réalisation représenté sur la figure, cette source est une source à laser déclenchée. Le faisceau laser impulsionnel 11 frappe l'échantillon 12 à étudier, grâce à des moyens optiques connus non référencés. L'échantillon émet alors un faisceau 2 d'ions, qui traverse divers éléments connus permettant d'assurer la concentration et le guidage de ce faisceau. Ces moyens connus ne sont pas référencés sur la figure. Une source d'ions, à laser déclenchée, de ce type peut être par exemple celle qui est décrite dans le brevet no. 1,580,234 dont la demande a été déposée le 15 mai 1968 au nom du même demandeur. Une source d'ions de type monoétincelle pourraît remplacer la source qui est décrite. Une telle source monoétincelle est décrite dans la demande de brevet No. 2,350,689 déposée le 3 mai 1976 au nom du même demandeur.

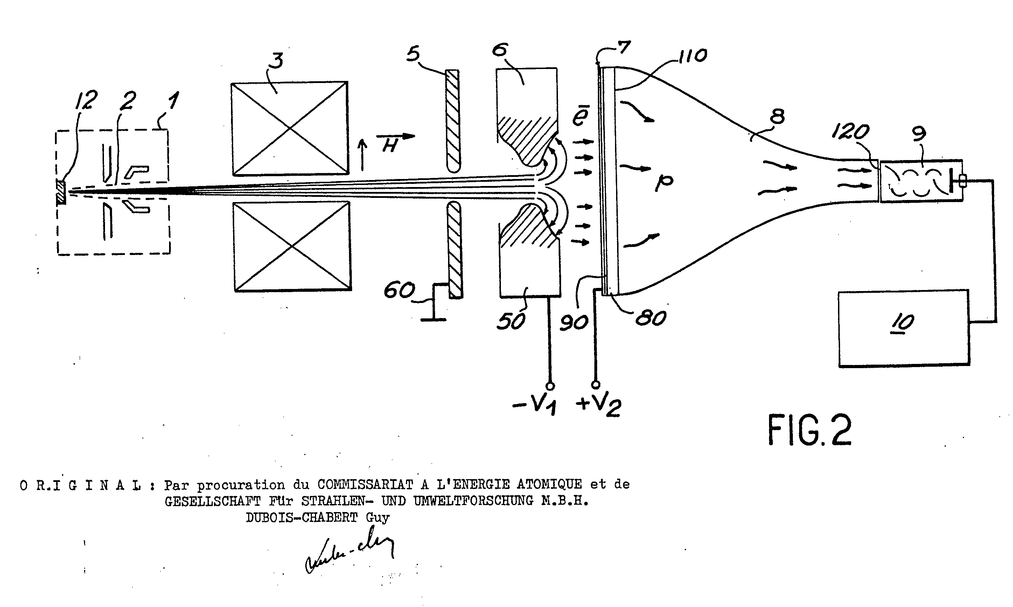

En référence à la figure 2, on a représenté, vu de côté et en coupe, le spectrographe de la figure 1. La source 1 émet un faisceau d'ions 2 produits par l'échantillon à étudier 12 sous l'effet par exemple d'un faisceau laser déclenché. Ce faisceau parvient aux moyens d'analyses 3, constitués par exemple par des bobines d'induction d'un champ magnetique $\vec{H}$. Ce champ magnétique permet de dissocier partiellement les différentes espèces ioniques. A la sortie des moyens 3, les ions traversent le diaphragme d'entrée 5 avant de parvenir aux moyens 6 qui permettant une conversion des ions en électrons. Ces moyens de conversion ont une structure continue à symétrie plane. Le diaphragme 5 est porté au potentiel de la terre 60, tandis que les moyens de conversion 6 sont portés à un potentiel négatif $-V_1$, par rapport au potentiel de la terre. Les moyens de conversion 6 des ions en électrons ont la forme d'électrodes représentées en coupe sur la figure. Ces électrodes peuvent être constituées dans un alliage de cuivre et de béryllium. Le champ électrique créé grâce au potentiel négatif appliqué à ces électrodes permet de dévier le faisceau d'ions tel que représenté sur la figure. Ces ions passent entre les bords des électrodes et viennent frapper ces dernières sur leur face aval; des électrons secondaires sont alors émis en direction des moyens 7 qui permettent une conversion des électrons en photons. Ces moyens de conversion sont situés en regard des moyens 6 de conversion des ions en électrons. Les moyens 7 de conversion des électrons en photons sont constitués par un scintillateur à structure plane, comprenant un support plastique 80, recouvert d'une très fine couche 90 d'aluminium, située en regard des moyens 6 de conversion des ions en électrons. La couche d'aluminium 90 est portée à un potentiel positif $+V_2$ par rapport au potentiel de la terre. A titre d'exemple, le potentiel négatif $-V_1$, auquel sont portées les électrodes des moyens de conversion des ions en électrons, est de l'ordre de $-10$ à $-15$ kV. Le potentiel positif $+V_2$, auquel est porté le scintillateur, est de l'ordre de $+10$ à $+20$ kV. La couche mince 90 d'aluminium qui recouvre le support plastique 80 a une épaisseur qui est inférieure ou égale à 200 Å.

Le support plastique 80 du scintillateur 7 se trouve en regard des moyens 8 de conduction des photons émis par le scintillateur 7. Ces moyens de conduction des photons ont une structure monobloc. Ils sont constitués dans une résine synthétique incolore. Cette résine synthétique est un polymère de méthacrylate de méthyle, plus connu sous la dénomination commerciale de plexiglass. La face d'entrée 110 de ces moyens de conduction est située en regard du scintillateur, tandis que la face de sortie 120 est située en regard du détecteur photoélectrique 9 constitué par exemple par un photomultiplicateur.

Les moyens 8 de conduction des photons, à structure monobloc, qui permettent de transmettre les photons du scintillateur vers le photomultiplicateur, ont une forme convergente en direction d'une fenêtre (non représentée) de ce photomultiplicateur.

Ainsi, aucune discontinuité spatiale n'est introduite, ni dans la détection des ions ni dans la création et la détection des photons lorsque l'on passe d'un ion de masse déterminée au suivant.

Les ions à collecter et à détecter sont post-accélérés par un champ électrique $\vec{E}$ appliqué entre le diaphragme 5 et les électrodes de conversion 6 des ions en électrons, de manière à introduire ces ions seulement dans l'espace de séparation ion-électron. Lorsque les ions parviennent dans cet espace, ils sont ralentis et défléchis, de façon à venir frapper, avec une grande énergie cinétique, la surface de l'électrode de conversion du côté qui est situé en regard du scintillateur 7. Cette trajectoire est bien entendu obtenue grâce à l'application d'un potentiel négatif par rapport à la terre, sur l'électrode 6, et à l'application d'un potentiel positif par rapport à la terre sur le scintillateur. Les ions qui frappent la surface de l'électrode 6 de conversion ion-électron, avec une certaine énergie cinétique, arrachent les électrons secondaires à cette électrode; ces électrons secondaires sont accélérés et viennent frapper la surface aluminisée du scintillateur. Les impacts de ces électrons secondaires produisent, dans le scintillateur un phénomène de scintillation; il en résulte des émissions de photons. Les moyens 8 de conduction de photons ont leur face 110 directement en contact avec le support plastique du scintillateur, sur une surface équivalente à celle de l'électrode de conversion 6, des ions en électrons. Les photons émis par le scintillateur sont canalisés et vont converger sur une fenêtre d'ouverture appropriée du photomultiplicateur 9, de manière à permettre la lecture de toutes les informations lumineuses, grâce aux moyens de visualisation 10, liés à ce détecteur photoélectrique. Le guide de lumière 8, de structure monobloc, permet un mélange spatial de toutes les informations photoniques; il en résulte qu'il est possible de lire simultanément des informations photoniques grâce à plusieurs photomultiplicateurs disposés sur le même guide de lumière.

Le spectrographe qui vient d'être décrit a pour avantage de fournir une réponse analytique très rapide.

L'interprétation du spectre de masse est très simplifiée. L'exactitude des résultats est sensiblement améliorée; en effet, ce spectrographe ne présente pas le même risque de saturation qui apparaissait dans les spectrographes utilisant le détecteur à canaux multiples. Ce spectrographe a de plus pour avantage de présenter une limite de détection qui est d'environ mille fois plus grande que celle d'un spectrographe à détecteur photographique. Le spectrographe de masse qui vient d'être décrit et dans lequel intervient une source d'ions pulsée permet de réaliser une séparation en temps de vol. Cette possibilité est due à l'utilisation d'une détection panoramique et instantanée. La réponse analytique de ce spectrographe est très rapide; l'interprétation des spectres de masse, analysés en temps de vol, est simplifiée. En effet, avec cette détection panoramique, la séparation temporelle du spectre de masse est bien supérieure à celle d'un spectrographe à trajectoire unique. Dans ce spectrographe, à chaque masse ionique correspond une longueur de parcours différente. Le temps de vol est d'autant plus faible que la masse ionique est plus petite. Le détecteur ayant une surface panoramique continue, il n'y a pas de surface collectrice aveugle et donc pas de perte de signal représentatif des ions à analyser, ce qui est un avantage notable par rapport au détecteur à microcanaux utilisé dans un spectrographe à séparation spatiale seule.

Il est bien évident que dans le spectrographe qui vient d'être décrit, les moyens utilisés auraient pu être remplacés par des moyens équivalents, sans sortir du cadre de l'invention.

Par exemple, le conduit de lumière monobloc n'est pas indispensable: on peut utiliser dans le spectrographe selon l'invention des conduits de lumière séparés à fibres optiques, par exemple tels que ceux que l'on utilise dans un spectrographe à séparation purement spatiale.

**Revendications**

1. Spectrographe de masse comprenant une source d'ions (1), des moyens (3) établissant un champ magnétique permettant une séparation spatiale des ions émis par la source et un détecteur panoramique (4) d'ions, caractérisé en ce que les moyens (3) permettant la séparation spatiale magnétique sont associés à des moyens de mesure à temps de vol, et en ce que le détecteur panoramique (4) d'ions permet la détection d'impact d'ions issus de tout l'espace créé par les moyens (3) permettant la séparation spatiale magnétique, au moyen d'un seul détecteur photoélectrique (9), et en ce que la source d'ions (1) est une source pulsée.

2. Spectrographe selon la revendication 1, caractérisé en ce que ladite source pulsée (1) est une source à laser déclenché.

3. Spectrographe selon la revendication 1, caractérisé en ce que ladite source pulsée (1) est une source à étincelles.

4. Spectrographe selon la revendication 1, caractérisé en ce que le détecteur panoramique (4) d'ions comprend:

— un diaphragme (5) d'entrée des ions;
— des moyens (6) situés en regard du diaphragme et permettant une conversion des ions en électrons;
— des moyens (7) situés en regard des moyens (6) de conversion des ions en électrons, et permettant une conversion des électrons en photons, le détecteur photoélectrique (9) étant situé en regard des moyens (7) de conversion des électrons en photons;
— des moyens (8) de conduction des photons situés entre les moyens (7) de conversion des électrons en photons et le détecteur photoélectrique (9), ces moyens de conduction des photons ayant une structure monobloc.

5. Spectrographe selon la revendication 4, caractérisé en ce que lesdits moyens (9) de conduction à structure monobloc sont constitués dans une résine synthétique incolore.

6. Spectrographe selon la revendication 5, caractérisé en ce que la résine synthétique est un polymère méthacrylate de méthyle.

7. Spectrographe selon la revendication 4, caractérisé en ce que lesdits moyens (9) de conduction à structure monobloc ont une forme convergente en direction d'une fenêtre située entre ces moyens de conduction et le détecteur photoélectrique (9).

8. Spectrographe selon la revendication 4, caractérisé en ce que les moyens (6) de conversion des ions en électrons ont une structure à symétrie plane.

9. Spectrographe selon la revendication 4, caractérisé en ce que le diaphragme (5) d'entrée des ions est porté au potentiel de la terre et que les moyens (6) de conversion des ions en électrons sont portés à un potentiel négatif par rapport au potentiel de la terre.

10. Spectrographe selon la revendication 9, caractérisé en ce que les moyens (6) de conversion des ions en électrons sont constitués dans un alliage de cuivre et de béryllium.

11. Spectrographe selon la revendication 4, caractérisé en ce que les moyens (7) de conversion des électrons en photons sont constitués par un scintillateur unique à structure plane.

12. Spectrographe selon la revendication 11, caractérisé en ce que ledit scintillateur (7) est constitué d'un support plastique aluminisé sur la face qui est en regard des moyens (6) de conversion des ions en électrons.

13. Spectrographe selon la revendication 12, caractérisé en ce que le diaphragme (5) d'entrée des ions étant porté au potentiel de la terre, le scintillateur (7) est porté à un potentiel positif par rapport au potentiel de la terre.

14. Spectrographe selon la revendication 4, caractérisé en ce que le détecteur photoélectrique est constitué par un photomultiplicateur (9).

15. Spectrographe selon la revendication 14, caractérisé en ce que les signaux de sortie du photomultiplicateur (9) sont appliqués à des moyens (10) d'enregistrement et de visualisation du spectre des photons.

16. Spectrographe selon la revendication 15, caractérisé en ce que les moyens (10) d'enregistrement et de visualisation sont constitués par un appareil à tube cathodique.

17. Spectrographe selon la revendication 15, caractérisé en ce que les moyens (10) d'enregistrement sont constitués par un dispositif de découpage en temps, de $n$ canaux correspondant à $n$ masses, et de stockage des valeurs des signaux correspondant aux $n$ canaux, dans $n$ unité de stockage.

**Patentansprüche**

1. Massenspektrograph, mit einer Ionenquelle (1), Mitteln (3) zum Erzeugen eines Magnetfeldes, welches eine räumliche Trennung der von der Quelle emittierten Ionen erlaubt, und einem Ionen-Panoramadetektor (4), dadurch gekennzeichnet, daß die die räumliche, magnetische Trennung erlaubenden Mittel (3) Mitteln zur Flugzeitmessung zugeordnet sind, und daß mit dem Ionen-Panoramadetektor (4) das Auftreffen der Ionen, welche aus dem gesamten, von dem eine räumliche, magnetische Trennung erlaubenden Mitteln (3) geschaffenen Raum austreten, mittels eines einzigen fotoelektrischen Detektors (9) feststellbar ist, und daß die Ionenquelle (1) eine gepulste Quelle ist.

2. Spektrograph nach Anspruch 1, dadurch gekennzeichnet, daß die gepulste Quelle (1) eine getriggerte Laserquelle ist.

3. Spektrograph nach Anspruch 1, dadurch gekennzeichnet, daß die gepulste Quelle (1) eine Blitzquelle ist.

4. Spektrograph nach Anspruch 1, dadurch gekennzeichnet, daß der Ionen-Panoramadetektor (4) umfaßt:

— eine Eintrittsblende (5) für die Ionen,
— Mittel (6), die gegenüber der Blende angeordnet sind und die eine Umwandlung der Ionen in Elektronen ermöglichen,
— Mittel (7), die gegenüber den Mitteln (6) zur Umwandlung der Ionen in Elektronen angeordnet sind und eine Umwandlung der Elektronen in Photonen ermöglichen, wobei der fotoelektrische Detektor (9) gegenüber den Mitteln (7) zur Umwandlung von Elektronen in Photonen angeordnet ist,
— Mittel (8) zum Leiten der Photonen, welche zwischen den Mitteln (7) zum Umwandeln der Elektronen in Photonen und dem fotoelektrischen Detektor (9) angeordnet sind, wobei diese Mittel zum Leiten der Photonen eine Monoblockstruktur aufweisen.

5. Spektrograph nach Anspruch 4, dadurch gekennzeichnet, daß die Mittel (8) zum Leiten in Form der Monoblockstruktur durch ein farbloses Kunstharz gebildet sind.

6. Spektrograph nach Anspruch 5, dadurch gekennzeichnet, daß das Kunstharz ein Polymethakrylsäuremethylester ist.

7. Spektrograph nach Anspruch 4, dadurch gekennzeichnet, daß die Mittel (8) zum Leiten in der Form einer Monoblockstruktur eine in Richtung eines Fensters, welches zwischen diesen Mitteln zum Leiten und dem fotoelektrischen Detektor (9) angeordnet ist, konvergierende Form aufweisen.

8. Spektrograph nach Anspruch 4, dadurch gekennzeichnet, daß die Mittel (6) zum Umwandeln der Ionen in Elektronen eine Struktur mit ebener Symmetrie aufweisen.

9. Spektrograph nach Anspruch 4, dadurch gekennzeichnet, daß die Eintrittsblende (5) für die Ionen auf Erdpotential liegt und daß die Mittel (6) zum Umwandeln der Ionen in Elektronen auf einem in bezug auf das Erdpotential negativen Potential liegen.

10. Spektrograph nach Anspruch 9, dadurch gekennzeichnet, daß die Mittel (6) zum Umwandeln der Ionen in Elektronen aus einer Legierung aus Kupfer und Beryllium gebildet sind.

11. Spektrograph nach Anspruch 4, dadurch gekennzeichnet, daß die Mittel (7) zum Umwandeln der Elektronen in Photonen durch einen einzigen Szintillator mit ebener Struktur gebildet sind.

12. Spektrograph nach Anspruch 11, dadurch gekennzeichnet, daß der Szintillator (7) aus einem Kunststoffträger gebildet ist, welcher auf der den Mitteln (6) zum Umwandeln der Ionen in Elektronen gegenüberliegenden Seite aluminisiert ist.

13. Spektrograph nach Anspruch 12, dadurch gekennzeichnet, daß die Eintrittsblende (5) für die Ionen auf Erdpotential und der Szintillator (7) auf einem relativ zu dem Erdpotential positiven Potential liegt.

14. Spektrograph nach Anspruch 4, dadurch gekennzeichnet, daß der fotoelektrische Detektor von einem Fotoelektronenvervielfacher (9) gebildet ist.

15. Spektrograph nach Anspruch 14, dadurch gekennzeichnet, daß die Ausgangssignale des Fotoelektronenvervielfachers (9) Mitteln (10) zum Aufzeichnen und zur Sichtbarmachung des Photonenspektrums zugeführt werden.

16. Spektrograph nach Anspruch 15, dadurch gekennzeichnet, daß die Mittel (10) zum Aufzeichnen und zur Sichtbarmachung durch ein Gerät mit einer Kathodenstrahlröhre gebildet sind.

17. Spektrograph nach Anspruch 15, dadurch gekennzeichnet, daß die Mittel (10) zum Aufzeichnen von einer Vorrichtung zur Unterteilung der Zeit in n Kanäle, welche n Massen entsprechen, und zum Speichern der den n Kanälen entsprechenden Signalwerten in n Speichereinheiten gebildet sind.

**Claims**

1. Mass spectrograph comprising an ion source (1), means (3) providing a magnetic field permitting spatial separation of ions emitted by the source, and a panoramic ion detector (4), characterized in that the magnetic means (3) permitting spatial separation are associated with flight time-measuring means, and in that the panoramic ion detector (4) permits detection, by a single photoelectric detector (9), of the impact of ions emitted over the entire space provided by the magnetic spatial separation means (3), and in that the ion source (1) is a pulsed source.

2. Mass spectrograph according to Claim 1 characterized in that the said pulsed source (1) is a laser-triggered source.

3. Mass spectrograph according to Claim 1 characterized in that the said pulsed source (1) is a spark source.

4. Mass spectrograph according to Claim 1 characterized in that the panoramic ion detector (4) comprises:

— an ion-entry diaphragm (5);
— ion-electron conversion means (6) facing the diaphragm;
— electron-photon conversion means (7) facing the ion-electron conversion means, the photoelectric detector (9) being situated facing the electron-photon conversion means (7); and
— photon-conducting means (8) situated between the electron-photon conversion means (7) and the photoelectric detector (9), the photon-conducting means having a monobloc structure.

5. Mass spectrograph according to Claim 4 characterized in that the said photon-conducting means (8) of monobloc structure comprises a colourless synthetic resin.

6. Mass spectrograph according to Claim 5 characterized in that the synthetic resin is a methyl methacrylate polymer.

7. Mass spectrograph according to Claim 4 characterized in that the said photon-conducting means (8) of monobloc structure has a form converging towards a window situated between the photon-conducting means and the photoelectric detector (9).

8. Mass spectrograph according to Claim 4 characterized in that the ion-electron conversion means (6) has a planar symmetrical structure.

9. Mass spectrograph according to Claim 4, characterized in that the ion-entry diaphragm (5) is charged to earth potential and that the ion-electron conversion means (6) is charged to a negative potential with respect to earth.

10. Mass spectrograph according to Claim 9 characterized in that the ion-electron conversion means (6) comprises a copper-beryllium alloy.

11. Mass spectrograph according to Claim 4 characterized in that the electron-photon conversion means (7) comprises a single scintillator of planar structure.

12. Mass spectrograph according to Claim 11 characterized in that the said scintillator (7) comprises a plastic substrate aluminized on the surface facing the ion-electron conversion means (6).

13. Mass spectrograph according to Claim 12 characterized in that the ion-entry diaphragm (5) is charged to earth potential and the scintillator (7) is charged to a positive potential with respect to earth.

14. Mass spectrograph according to Claim 4 characterized in that the photoelectric detector comprises a photomultiplier (9).

15. Mass spectrograph according to Claim 14 characterized in that the exit signals from the photomultiplier (9) are supplied to means (10) for recording and visualizing the photon spectrum.

16. Mass spectrograph according to Claim 15 characterized in that the recording-visualizing means (10) comprise a cathode-ray tube apparatus.

17. Mass spectrograph according to Claim 15 characterized in that the recording means (10) comprise a time-dividing means having $n$ channels corresponding to $n$ masses, and storage means for signal values corresponding to $n$ channels in $n$ storage units.

FIG.1

FIG.2